# EUROPEAN PATENT APPLICATION

(11) **EP 3 621 003 A1**
(43) Date of publication of application: **11.03.2020**
(21) Application number: 19180907.8
(22) Date of filing: 18.06.2019
(51) Int. Cl.: G06Q 10/06, G06Q 50/30

(54) **METHOD, APPARATUS AND DEVICE FOR SCHEDULING UNMANNED VEHICLES AND STORAGE MEDIUM**

(30) Priority: 10.09.2018 CN 201811052541
(71) Applicant: Baidu Online Network Technology (Beijing) Co., Ltd., Beijing 100085 (CN)
(72) Inventor: XIA, Na, Beijing, Beijing 100085 (CN)
(74) Representative: Samson & Partner Patentanwälte mbB

(57) **Abstract**

A method, an apparatus and a device for scheduling unmanned vehicles and a storage medium provided by the present application, by receiving a scheduling request including a car-hailing order through a scheduling management platform, scheduling an unmanned vehicle from a resource pool of unmanned vehicles according to the scheduling request, generating an order task according to the car-hailing order and allocating the order task to the unmanned vehicle, makes the unmanned vehicle to operate according to the order task. The present application does not require the unmanned vehicle to be directly jointed into network car-hailing operator platforms, thereby avoiding scheduling failure led by unmanned car receiving different orders at the same time, and achieving quick and safe scheduling management of unmanned vehicles.

## Description

### TECHNICAL FIELD

The present application relates to the field of communication technologies, and in particular, to a method, an apparatus and a device for scheduling unmanned vehicles and a storage medium.

### BACKGROUND

An unmanned vehicle is a kind of automobiles that relies on computer system based in-car intelligence devices to implement unmanned driving. The unmanned vehicle concentrates multiple technologies such as automatic control, system architecture, artificial intelligence, visual computing and the like, which is a production from high development of computer science, pattern recognition and intelligent control technologies, is also an important symbol for measuring national scientific research and industrial level, and has a broad application prospect in the field of national defense and national economy. Unmanned vehicles, as a development direction of future automobiles, have been studied extensively by countries around the world.

Unmanned vehicles could be jointed into a network car-hailing operator platform in the prior art, some network car-hailing operator platforms receive car orders from passengers and send these orders to unmanned vehicles, and the unmanned vehicles will pike up passengers according to the car-hailing orders.

However, as an unmanned vehicle may be jointed into different network car-hailing operator platforms normally, when one unmanned vehicle receives car-hailing orders transmitted from multiple network car-hailing operator platforms at the same time, it could lead to scheduling failure, and make car-hailing orders unable to be completed.

### SUMMARY

Embodiments of the present application provides a method, an apparatus and a device for scheduling unmanned vehicles and a storage medium, in order to avoid scheduling failure led by unmanned car receiving different orders at the same time, achieving quick and safe scheduling management of unmanned vehicles.

A first aspect of the present application, provides a method for scheduling unmanned vehicles, including:
receiving a scheduling request, the scheduling request includes a car-hailing order;
scheduling an unmanned vehicle from a resource pool of unmanned vehicles according to the scheduling request; and
generating an order task according to the car-hailing order, and allocating the order task to the unmanned vehicle, so that the unmanned vehicle operates according to the order task.

A second aspect of the present application, provides an apparatus for scheduling unmanned vehicles, including:
a receiving module, configured to receive a scheduling request, the scheduling request includes a car-hailing order;
a scheduling module, configured to schedule an unmanned vehicle from a resource pool of unmanned vehicles according to the scheduling request, generating an order task according to the car-hailing order, and allocating the order task to the unmanned vehicle, so that the unmanned vehicle operates according to the order task.

A third aspect of the present application, provides a device for scheduling unmanned vehicles, including:
a memory;
a processor; and
a computer program;
where, the computer program is stored in the memory, and is configured to implement the method according to the first aspect when executed by the processor.

A fourth aspect of the present application, provides a computer readable storage medium, with a computer program stored therein;
the computer program, when executed by the processor, implements the method according to the first aspect.

The method, the apparatus and the device for scheduling unmanned vehicles and the storage medium provided by the present application, by receiving a scheduling request including a car-hailing order through a scheduling management platform, scheduling an unmanned vehicle from a resource pool of unmanned vehicles according to the scheduling request, generating an order task according to the car-hailing order and allocating the order task to the unmanned vehicle, makes the unmanned vehicle to operate according to the order task. The present application does not require the unmanned vehicle to be directly jointed into network car-hailing operator platforms, thereby avoiding scheduling failure led by unmanned car receiving different orders at the same time, and achieving quick and safe scheduling management of unmanned vehicles.

### BRIEF DESCRIPTION OF DRAWINGS

In order to explain technical solutions in embodiments of the present application or the prior art clearer, the following will briefly introduce the accompany drawings which are needed to be used in embodiments or descriptions in the prior art. Apparently, the accompany drawings described below are merely some embodiments of the present application, other drawings may be obtained according to these drawings by persons of ordinary skills in the art without creative effort.
FIG. 1 is a schematic diagram of a system for scheduling unmanned vehicles according to an embodiment of the present application;
FIG. 2 is a flowchart of a method for scheduling unmanned vehicles according to an embodiment of the present application;
FIG. 3 is a flowchart of the method for scheduling unmanned vehicles according to another embodiment of the present application;
FIG. 4 is a schematic diagram of an apparatus for scheduling unmanned vehicles according to an embodiment of the present application; and
FIG. 5 is a schematic diagram of a device for scheduling unmanned vehicles according to an embodiment of the present application.

### DESCRIPTION OF EMBODIMENTS

The following will clearly and comprehensively describe the technical solutions in embodiments of the present application with reference to the accompanying drawings in embodiments of the present application. Apparently, the embodiments are merely a part rather than all embodiments of the present application. All other embodiments obtained by persons of ordinary skill in the art according to embodiments of the present application without creative effort shall fall within the protection scope of the present application.

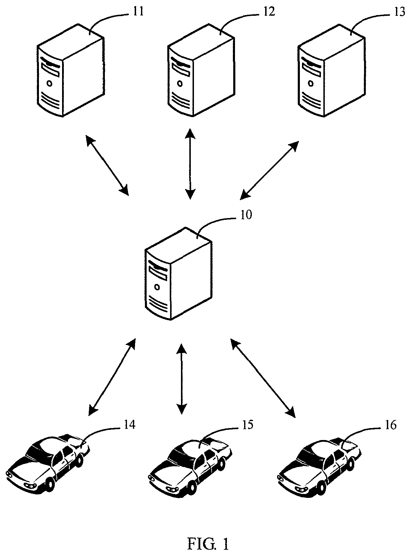

The method for scheduling unmanned vehicles according to the present application could be applied to an unmanned vehicle scheduling system described in FIG.1. As shown in FIG.1, the unmanned vehicles scheduling system includes a unmanned vehicle scheduling management platform 10, a plurality of network car-hailing operator platforms 11, 12, 13, and a plurality of unmanned vehicles 14, 15, 16, where the network car-hailing operator platforms 11, 12, 13 respectively communicates with the scheduling management platform 10, the network car-hailing operator platform 11, 12, 13 receives a car-hailing order from a passenger, and sends an scheduling request with the car-hailing order carried therein to the scheduling management platform 10; the scheduling management platform 10 connects to the unmanned vehicles 14, 15, 16 in communication, for scheduling the unmanned vehicles 14, 15, 16 according to the scheduling request. It should be noted that FIG.1 is merely an illustration to the unmanned vehicle scheduling system, but not a limitation to quantity. Of course, the role of the network car-hailing operator platform may be played by other forms of participant, or the car-hailing orders from passengers may be received directly by the scheduling platform 10 alone. The following will describe a building process of a blockchains network with reference to specific embodiments of the present application in detail.

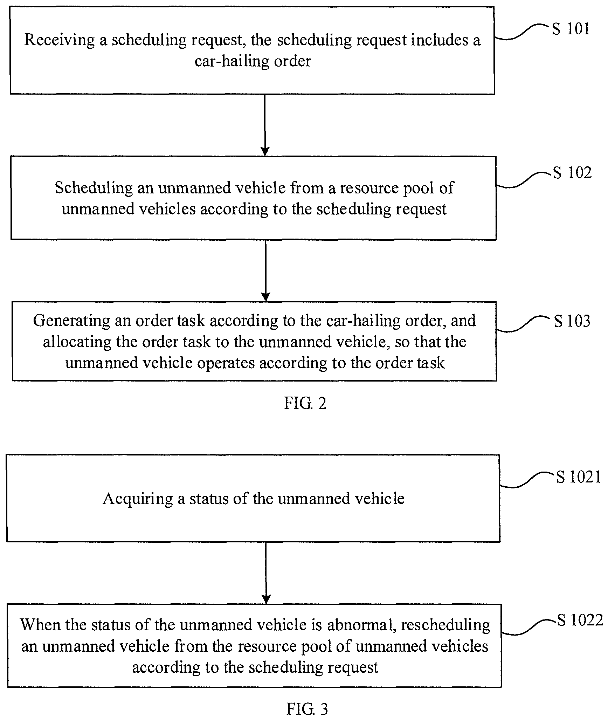

FIG. 2 is a flowchart of a method for scheduling unmanned vehicles according to an embodiment of the present application. The present embodiments provide a method for scheduling unmanned vehicles, with the scheduling management platform as an execution entity, and the method specifically includes the following steps:
S101: receiving a scheduling request, the scheduling request includes a car-hailing order.

In this embodiment, a network car-hailing operator platform may receive car-hailing orders from passengers, where in the car-hailing order, a starting position, a destination position, car-hailing time and other information may be appointed. The network car-hailing operator platform sends the scheduling request that carries the car-hailing order to the scheduling management platform according to the car-hailing order, so that the scheduling management platform schedules according to the scheduling request. Of course, car-hailing orders from passengers may also be received by other forms of participants, or by the scheduling management platform directly. In which, the car-hailing orders from passengers may originate from network, phone or any other forms.

S102: Scheduling the unmanned vehicle from a resource pool of unmanned vehicles according to the scheduling request.

In this embodiment, the network car-hailing operator platform may resolve the car-hailing order according to the scheduling request, then obtain the starting position of the car-hailing order from the car-hailing order, afterwards, search an unmanned vehicle closest to the starting position of the car-hailing order from the resource pool of unmanned vehicles, and take the unmanned vehicle as a scheduled unmanned vehicle to fulfill the car-hailing order. More specifically, when searching for the unmanned vehicle closest to the starting position of the car-hailing order from the resource pool of unmanned vehicles, it may take a straight-line distance as a searching standard, or certainly, it may take a length of a route from the unmanned vehicle to the starting position of the car-hailing order as the searching standard. It is certainly that the unmanned vehicle may be scheduled according to other strategies, which is not described herein. In which, the resource pool of unmanned vehicles is a resource pool consist of unmanned vehicles that are idle currently, and the unmanned vehicle may be rejoined into the resource pool of unmanned vehicles after fulfilling the order task.

S103: generating an order task according to the car-hailing order and allocating the order task to the unmanned vehicle, so that the unmanned vehicle operates according to the order task.

In this embodiment, the scheduling management platform generates the order task according to the car-hailing order, specifically plans a driving route and the like according to the starting position and the destination position of the car-hailing order, then allocates the order task to the scheduled unmanned vehicle. The unmanned vehicle fulfills the task order after receiving it, and may drive according to a pre-planned driving route in the order task, and may plan the driving route in real time according to information of specific road condition and the like during driving.

The method for scheduling unmanned vehicles provided by the present embodiment, by receiving a scheduling request including a car-hailing order through a scheduling management platform, scheduling an unmanned vehicle from a resource pool of unmanned vehicles according to the scheduling request, generating an order task according to the car-hailing order and allocating the order task to the unmanned vehicle, makes the unmanned vehicle to operate according to the order task. The present application does not require the unmanned vehicle to be directly jointed into network car-hailing operator platforms, thereby avoiding scheduling failure led by unmanned car receiving different orders at the same time, and achieving quick and safe scheduling management of unmanned vehicles.

Based on the above embodiments, as shown in FIG.3, after scheduling the unmanned vehicle from the resource pool of unmanned vehicles according to the scheduling request in S102, it may further include:
S1021: acquiring a status of the unmanned vehicle; and
S1022: when the status of the unmanned vehicle is abnormal, rescheduling an unmanned vehicle from the resource pool of unmanned vehicles according to the scheduling request.

In this present embodiment, after the unmanned vehicle to be scheduled is selected, the status of the unmanned vehicle, is acquired remotely, where the status of the unmanned vehicle specifically includes a status of a plurality of modules such as a natural environment perception module, a decision-making module, a controlling module and the like, in order to determine whether this unmanned vehicle can work normally, when an abnormal state has been detected, an unmanned vehicle is rescheduled, and also a maintainer is alerted to maintain the unmanned vehicle in abnormal status.

As a further improvement according to embodiments described above, the method for scheduling unmanned vehicles further includes:
rejoining the unmanned vehicle into the resource pool of unmanned vehicles after the unmanned vehicle has fulfilled the order task.

In the present embodiment, the scheduling management platform may monitor a process of the order task executed by the unmanned vehicle in real time. When the unmanned vehicle has fulfilled the order task, it would be rejoined into the resource pool of unmanned vehicles by the scheduling management platform. More specifically, a current position of the unmanned vehicle may be recorded for the next scheduling. Of course, the unmanned vehicle may positively inform the scheduling management platform about the mission status after fulfilling the order task. Afterwards, the unmanned vehicle is rejoined into the resource pool of unmanned vehicles by the scheduling management platform.

Further, before rejoining the unmanned vehicle into the resource pool of unmanned vehicles, it may further include:
acquiring the status of the unmanned vehicles; and
when the status of the unmanned vehicle is abnormal, alerting a maintainer to maintain the unmanned vehicle.

In this embodiment, the status of the unmanned vehicle may also be detected before rejoining the unmanned vehicle fulfilling the order task and idled into the resource pool of unmanned vehicles. The scheduling management platform acquires the current status of the unmanned vehicle and determines whether the status is abnormal. When the status is normal, the unmanned vehicle is rejoined into the resource pool of unmanned vehicles directly, and when the status is abnormal, alerting is performed to inform a maintainer to maintain the unmanned vehicle.

As a further improvement of embodiments described above, the method for scheduling unmanned vehicles may further include:
monitoring the status of the unmanned vehicle in real time while the unmanned vehicle executes the order task;
when the status of the unmanned vehicle is abnormal, alerting a security staff in the unmanned vehicle to perform a system recovery operation for the unmanned vehicle; and/or
acquiring a system log of the unmanned vehicle, and sending the system log to a remote dispatcher, so that the remote dispatcher assists the unmanned vehicle remotely to perform a system recovery operation.

In the present embodiment, the scheduling management platform may monitor the status of the unmanned vehicle in real time during the process of executing the order task by the unmanned vehicle. When the abnormal status occurs, an alerting is performed to inform a security staff in the vehicle to perform a system recovery operation for the unmanned vehicle, in order to solving the abnormal condition; and when the security staff in the vehicle cannot recover the system, then the system log of the unmanned vehicle is acquired and sent to a remote dispatcher, so that the system recovery operation of the unmanned vehicle may be performed with remote assistance by the remote dispatcher. Of course, when abnormal status occurred during the process of executing the order task by the unmanned vehicle, the system log may be sent to the remote dispatcher directly, and the remote dispatcher assists the unmanned vehicle remotely to perform a system recovery operation.

Further, when the status of the unmanned vehicle is still abnormal after the system recovery operation, the unmanned vehicle is controlled to stop and a parking position is acquired; and
a second unmanned vehicle is scheduled from the resource pool of unmanned vehicles, and the parking position along with the order task is sent to the second unmanned vehicle, so that the second unmanned vehicle goes to the parking position and resumes the order task.

As a further improvement according to embodiments described above, the method for scheduling unmanned vehicles may further include:
optimizing a driving route of the unmanned vehicle according to historical operation data and/or current road condition information.

In this embodiment, when the order task is generated, the driving route may be planned, and may also be optimized according to actual conditions while the unmanned vehicle executes the order task. In which, the process of planning and optimizing the driving routes may both rely on historical operation data and/or the current road condition information. Of course, other factors such as weather conditions, temporary traffic control and the like may be also be considered.

As a further improvement according to embodiments described above, the method for scheduling unmanned vehicles may further include:
acquiring a hotspot region of car-hailing orders according to historical operation data; and
planning a position of an unmanned vehicle in the resource pool of unmanned vehicles according to the hotspot region.

In this embodiment, in order to facilitate passengers to take unmanned vehicles timely and reduce waiting time, regions with more car-hailing requirements may be allocated more unmanned vehicles, that is, the hotspot regions for car-hailing orders, such as airports, train stations and areas with large flows of people, may be acquired according to historical operation data, then are allocated with unmanned vehicles as many as possible from the resource pool of unmanned vehicles, thereby bringing greater convenience to passengers.

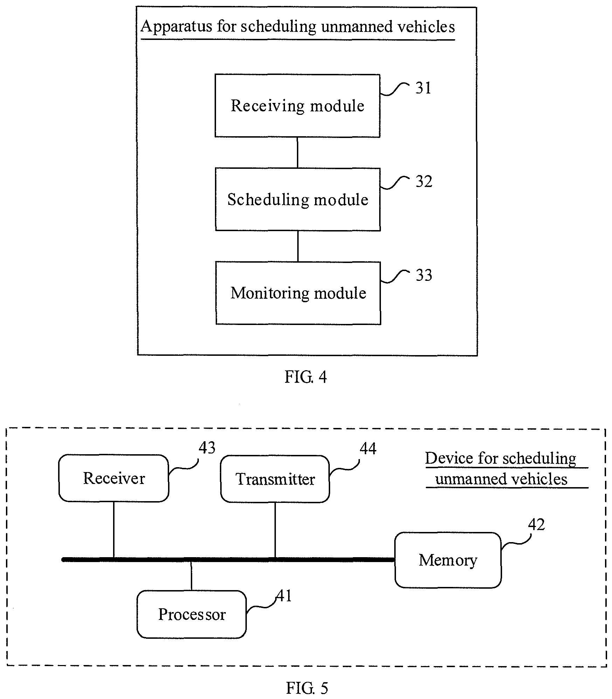

FIG. 4 is a schematic diagram of an apparatus for scheduling unmanned vehicles according to an embodiment of the present application. The apparatus for scheduling unmanned vehicles according to the present embodiment may execute the processing flow according to the method for scheduling unmanned vehicles. As shown in FIG.4, the apparatus for scheduling unmanned vehicles includes a receiving module 31 and a scheduling module 32.

Where, the receiving module 31, is configured to receive a scheduling request, the scheduling request includes a car-hailing order; and
the scheduling module 32, is configured to schedule the unmanned vehicle from a resource pool of unmanned vehicles according to the scheduling request; generate an order task according to the car-hailing order, and allocate the order task to the unmanned vehicle, so that the unmanned vehicle operates according to the order task.

Furthermore, the scheduling module is configured to:
acquire the starting position of car-hailing order in the scheduling request; and
search for the unmanned vehicle closest to the starting position of the car-hailing order from the resource pool of unmanned vehicles and schedule the unmanned vehicle.

Furthermore, the apparatus further includes:
a monitoring module 33, configured to acquire a status of the unmanned vehicle after scheduling the unmanned vehicle from the resource pool of unmanned vehicles according to the scheduling request; and
the scheduling module 32, is further configured to, when the status of the unmanned vehicle is abnormal, reschedule an unmanned vehicle from the resource pool of unmanned vehicles according to the scheduling request.

Furthermore, the scheduling module 32 is further configured to:
rejoin the unmanned vehicle into the resource pool of unmanned vehicles after the unmanned vehicle has fulfilled the order task.

Furthermore, the monitoring module 33 is further configured to:
acquire a status of the unmanned vehicle before the unmanned vehicle is rejoined into resource pool of unmanned vehicles; and
when the status of the unmanned vehicle is abnormal, alert a maintainer to maintain the unmanned vehicle.

Furthermore, the monitoring module 33 is further configured to:
monitor a status of the unmanned vehicle in real time while the unmanned vehicle executes the order task; and
when the status of the unmanned vehicle is abnormal, alert a security staff in the unmanned vehicle to perform a system recovery operation for the unmanned vehicle; and/or
acquire a system log of the unmanned vehicle, and send the system log to a remote dispatcher, so that the remote dispatcher assists the unmanned vehicle remotely to perform a system recovery operation.

Furthermore, the scheduling module 32 is further configured to:
when the status of the unmanned vehicle is abnormal after the system recovery operation, control the unmanned vehicle to stop and acquire a parking position; and
schedule a second unmanned vehicle form the resource pool of unmanned vehicles, and send the parking position along with the order task to the second unmanned vehicle, so that the second unmanned vehicle goes to the parking position and resume the order task.

Furthermore, the scheduling module 32 is further configured to:
optimize a driving route of the unmanned vehicle according to historical operation data and/or current road condition information.

Furthermore, the scheduling module 32 is further configured to:
acquire a hotspot region of car-hailing orders according to historical operation data; and
plan a position of the unmanned vehicle in the resource pool of unmanned vehicles according to the hotspot region.

The apparatus for scheduling unmanned vehicles according to the present embodiment can specifically execute the method embodiments according to FIG.2 and FIG. 3 described above, and the functions thereof is not repeated herein.

The apparatus for scheduling unmanned vehicles provided by the present embodiment, by receiving a scheduling request including a car-hailing order through a scheduling management platform, scheduling an unmanned vehicle from a resource pool of unmanned vehicles according to the scheduling request, generating an order task according to the car-hailing order and allocating the order task to the unmanned vehicle, makes the unmanned vehicle to operate according to the order task. The present application does not require the unmanned vehicle to be directly jointed into network car-hailing operator platforms, thereby avoiding scheduling failure led by unmanned car receiving different orders at the same time, and achieving quick and safe scheduling management of unmanned vehicles.

FIG. 5 is a schematic diagram of a device for scheduling unmanned vehicles according to another embodiment of the present application. As shown in FIG.5, the present embodiment provides a device for scheduling unmanned vehicles, and the device for scheduling unmanned vehicles includes: a processor 41, a memory 42, and a computer program.

In this embodiment, the computer program is stored in the memory 42, and is configured to be executed by the processor 41 to implement the processing flow according to the method embodiments provided in FIG.2 and FIG. 3, and is not repeated herein.

More specifically, the device for scheduling unmanned vehicles further includes a receiver 43 and a transmitter 44, the receiver 43, transmitter 44, the processor 41 and the memory 42 are connected via a bus.

Another embodiment of the present application provides a computer readable storage medium, with a computer program stored thereon.

The computer program, when executed by the processor, implements the method for scheduling unmanned vehicles according to embodiment as shown in FIG. 2 and FIG. 3.

In the embodiments provided in the present application, it should be noted that the disclosed apparatus and method may be implemented in other forms. For example, the device embodiments described above are merely illustrative, for example, the division of the units, are merely division of logic function, and may be divided in other forms in actual implementation. For example, a plurality of units or components may be combined or integrated into another system, or some features may be omitted or not be executed. In addition, the mutual coupling, direct coupling, or a communication connection as shown or discussed, may be indirect coupling or communication connection through some interfaces, apparatuses, or units, and may be electrical, mechanical, or in other forms.

The units described as separate units may be or may not be physically separated, and the parts shown as units may be or may not be physical units, that is, the parts may be located in a same place, or may be distributed in multiple network units. Part of or all the units therein may be selected according to a practical need to achieve the objective of the solutions of the embodiments of the present application.

In addition, the function units in respective embodiments of the present application may be integrated into one processing unit, or may exist separately and physically, or two or more units may be integrated into one unit. The above integrated units may be implemented through hardware, or may also be implemented in a form of hardware and software functional unit.

The above-described integrated units implemented in a form of a software functional unit may be stored in a computer readable storage medium. The above software functional unit is stored in a storage medium and includes several instructions which are used to perform the part of steps of the methods of the various embodiments of the present application by a computer device (may be a personal computer, a server, or a network device and etc.) or a processor. The foregoing storage medium includes: a U disk, a mobile hard disk, a read-only memory (ROM), a random access memory (RAM), a magnetic disk, or an optical disk, and the like, which can store program codes.

Persons of ordinary skill in the art can understand clearly that, for the convenience and brevity of the description, the division of functional modules described above is merely exemplified. In practical applications, the above functions may be assigned into different functional modules as needed, that is, in order to perform all or part of the functions described above, the internal structure of the device is divided into different functional modules. For the specific working process of the apparatus described above, reference may be made to the corresponding process in the foregoing method embodiments, and details are not described herein again.

Finally, it should be noted that the foregoing embodiments are merely intended for describing the technical solutions of the present application other than limiting the present application. Although the present application is described in detail with reference to the foregoing embodiments, persons of ordinary skill in the art should understand that they may still make modifications to the technical solutions described in the foregoing embodiments or make equivalent substitutions to part of or all technical features thereof, without departing from the scope of the technical solutions of embodiments of the present application.

## Claims

1. A method for scheduling unmanned vehicles, comprising:
receiving (S101) a scheduling request, the scheduling request comprising a car-hailing order;
scheduling (S102) a first unmanned vehicle from a resource pool of unmanned vehicles according to the scheduling request; and
generating (S103) an order task according to the car-hailing order, and allocating the order task to the first unmanned vehicle, so that the first unmanned vehicle operates according to the order task.

2. The method according to claim 1, wherein the scheduling (S102) the first unmanned vehicle from the resource pool of unmanned vehicles according to the scheduling request, specifically comprises:
acquiring a starting position of the car-hailing order in the scheduling request; and
searching the first unmanned vehicle closest to the starting position of the car-hailing order from the resource pool of unmanned vehicles and scheduling the first unmanned vehicle.

3. The method according to claim 1, after the scheduling (S102) the first unmanned vehicle from the resource pool of unmanned vehicles according to the scheduling request, further comprising:
acquiring (S1021) a status of the first unmanned vehicle;
when the status of the first unmanned vehicle is abnormal, rescheduling (S1022) a second unmanned vehicle from the resource pool of unmanned vehicles according to the scheduling request.

4. The method according to claim 1, further comprising:
rejoining the first unmanned vehicle into the resource pool of unmanned vehicles after the first unmanned vehicle has fulfilled the order task.

5. The method according to claim 4, before the rejoining the first unmanned vehicle into the resource pool of unmanned vehicles, further comprising:
acquiring a status of the first unmanned vehicle; and
when the status of the first unmanned vehicle is abnormal, alerting a maintainer to maintain the first unmanned vehicle.

6. The method according to claim 1, further comprising:
monitoring a status of the first unmanned vehicle in real time while the first unmanned vehicle executes the order task; and
when the status of the first unmanned vehicle is abnormal, alerting a security staff in the first unmanned vehicle to perform a system recovery operation for the unmanned vehicle; and/or
acquiring a system log of the first unmanned vehicle, and sending the system log to a remote dispatcher, so that the remote dispatcher assists the first unmanned vehicle remotely to perform a system recovery operation.

7. An apparatus for scheduling unmanned vehicles, comprising:
a receiving module (31), configured to receive scheduling request, the scheduling request comprising a car-hailing order; and
a scheduling module (32), configured to schedule a first unmanned vehicle from a resource pool of unmanned vehicles according to the scheduling request, generate an order task according to the car-hailing order, and allocate the order task to the first unmanned vehicle, so that the first unmanned vehicle operates according to the order task.

8. The apparatus according to claim 7, the scheduling module (32) is configured to:
acquire a starting position of the car-hailing order in the scheduling request; and
search for a first unmanned vehicle closest to the starting position of the car-hailing order from the resource pool of unmanned vehicles, and schedule the first unmanned vehicle.

9. The apparatus according to claim 7, further comprising:
a monitoring module (33), configured to acquire a status of the first unmanned vehicle after the first unmanned vehicle has been scheduled from the resource pool of unmanned vehicles; and
when the status of the first unmanned vehicle is abnormal, the scheduling module (32), is further configured to reschedule a second unmanned vehicle from the resource pool of unmanned vehicles according to the scheduling request.

10. The apparatus according to claim 9, the scheduling module (32) is further configured to:
rejoin the first unmanned vehicle into the resource pool of unmanned vehicles after the first unmanned vehicle has fulfilled the order task.

11. The apparatus according to claim 10, the monitoring module (33) is further configured to:
acquire a status of the first unmanned vehicle before the first unmanned vehicle is rejoined into the resource pool of unmanned vehicles; and
when the status of the first unmanned vehicle is abnormal, alert a maintainer to maintain the unmanned vehicle.

12. The apparatus according to claim 9, the monitoring module (33) is further configured to:
monitor a status of the first unmanned vehicle in real time while the first unmanned vehicle executes the order task; and
when the status of the first unmanned vehicle is abnormal, alert a security staff in the unmanned vehicle to perform a system recovery operation for the first unmanned vehicle; and/or
acquire a system log of the first unmanned vehicle, and send the system log to a remote dispatcher, so that the remote dispatcher assists the first unmanned vehicle remotely to perform a system recovery operation.

13. The apparatus according to claim 12, the scheduling module (32) is further configured to:
when the status of the unmanned vehicle is still abnormal after the system recovery operation, control the unmanned vehicle to stop and acquire a parking position; and
schedule a second unmanned vehicle from the resource pool of unmanned vehicles, and send the parking position along with the order task to the second unmanned vehicle, so that the second unmanned vehicle goes to the parking position to resume the order task.

14. The apparatus according to claim 7, the scheduling module (32) is further configured to:
optimize a driving route of the unmanned vehicle according to historical operation data and/or current road condition information.

15. The apparatus according to claim 7, the scheduling module (32) is further configured to:
acquire a hotspot region of car-hailing orders according to historical operation data; and
planning a position of an unmanned vehicle in the resource pool of unmanned vehicles according to the hotspot region.
